# EUROPEAN PATENT APPLICATION

(11) **EP 3 035 768 A1**
(43) Date of publication of application: **22.06.2016**
(21) Application number: 14836464.9
(22) Date of filing: 21.05.2014
(51) Int. Cl.: H04W 76/02

(54) **DATA LINK DETECTION METHOD, APPARATUS, SYSTEM, CONTROLLER, AND GATEWAY**

(30) Priority: 13.08.2013 CN 201310351481
(71) Applicant: ZTE Corporation, Shenzhen, Guangdong 518057 (CN)
(72) Inventor: BI, Yifeng, Shenzhen Guangdong 518057 (CN); WANG, Jing, Shenzhen Guangdong 518057 (CN); ZHOU, Na, Shenzhen Guangdong 518057 (CN); WANG, Jun, Shenzhen Guangdong 518057 (CN)
(74) Representative: Carangelo, Pierluigi
(86) International application number: PCT/CN2014/078049
(87) International publication number: WO 2015/021800

(57) **Abstract**

The invention provides a method, device and system for detecting a data link, a controller and a gateway. The method comprises the steps that a UGW receives context information, sent by the SDN controller, of a GTP user plane; and the UGW detects a data link between the gateways according to the context information of the GTP user plane. By means of the method, device and system for detecting a data link, the controller and the gateway, the problem that in the related art, the logic of the user plane and the logic of a control plane are unclear during detection of the data link between GTP endpoints is solved, and the effect of improving the clarity of the logic of the user plane and the logic of the control plane is achieved.

## Description

### Technical Field

The present invention relates to the field of communications, and in particular to a method, device and system for detecting a data link.

### Background

The OPENFLOW (OF) protocol is a forward/control separation protocol proposed in 2008 by the Stanford University, an external control plane entity uses the OF protocol to control a forwarding plane device to realize various forwarding logics, and the main function of the forwarding plane device is performing a controlled forwarding according to an OPENFLOW table sent by an OF controller. The OF protocol further evolves to become a Software Defined Network (SDN) technology, i.e., various complex network applications can be achieved under a control plane using software programming, for example, an Evolved Packet System (EPS)/General Packet Radio Service (GPRS) network is achieved using the SDN. An EPS network is a fourth generation mobile communication network defined by the 3rd Generation Partnership Project (3GPP), and a GPRS network is the third generation mobile communication network defined by the 3GPP.

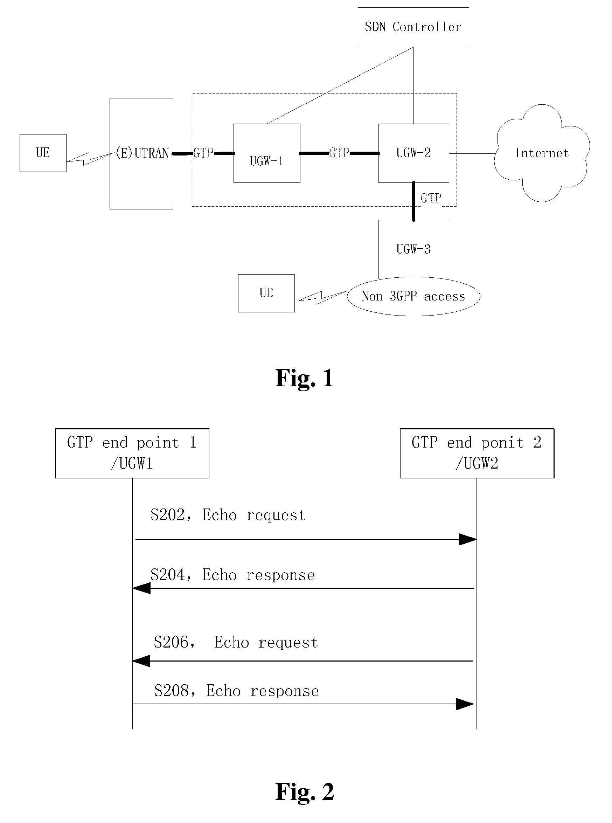

Fig. 1 is an architecture diagram for realizing an EPS/GPRS network using the SDN according to the related art, the architecture mainly comprises a User Equipment (UE), an (Evolved) Universal Terrestrial Radio Access Network ((E)UTRAN), a core network, a controller and an internet, wherein the UE is a communication terminal, the (E)UTRAN is a wireless access network part, the inside of the (E)UTRAN is composed of an evolved NodeB (eNodeB) or a NodeB, the core network is a software-defined Evolved Packet Core (EPC) and is the core network part of the EPS, all the Unified Gateways (UGW) in the core network are universal gateway devices, and the roles thereof are controlled by a control signalling of an SDN Controller. For example, for an IP connection of a certain UE, a Unified Gateway (UGW-1) plays the role of a Serving Gateway (SGW) or a Serving GPRS Support Node (SGSN), a UGW2 plays the role of a Packet Data Network Gateway (P-GW) or a Gateway GPRS Support Node (GGSN), and a UGW3 plays the role of a non-3GPP access gateway or an Evolved Packet Data Gateway (ePDG). In this way, provided between the (E)UTRAN and the UGW-1, between the UGW-1 and the UGW-2 and between the UGW-2 and the UGW-3 are all interfaces based on a GPRS Tunnel Protocol-User Plane (GTP-U) protocol. In other words, the GTP-U protocol must be supported between the UGW and the (e)NB, between the UGWs or between the UGW and the traditional GTP network element.

The GPRS Tunnel Protocol (GTP) is a group of protocol defined by the 3GPP, which is divided into a GPRS Tunnel Protocol- Controller Plane (GTP-C) protocol and a user plane protocol GTP-U. The GTP-U is a protocol used for data encapsulation and forwarding between gateways, besides this, the GTP-U also has a set of self-session detection mechanisms; a link is detected by sending an echo request message and an echo response message of the GTP-U to an opposite end, and the status of the path is detected, the specific flow is as shown in Fig. 2, comprising the following steps.

In step S202, the UGW1 sends an echo request message to the UGW2.

One UGW, such as the UGW1, serves as a GTP endpoint 1 to send the echo request message to the other UGW of the GTP endpoint 2, such as the UGW2, and a timer t1 is started after the UGW1 sends the echo request message.

The destination address of the echo request message is the address of the GTP endpoint 2, the destination port number of a User Datagram Protocol (UDP) is set to be 2152, a Tunnel Endpoint Identifier (TEID) is all-zero, the source address is the address of the UGW1 itself, and the source port number is any configured port. The Sequence Number (SN) is the initial value, such as 0, or a value that is set to add 1 to the Sequence Number of the last echo request message.

In step S204, the UGW2 sends an Echo response message to the UGW1.

The GTP endpoint 2, i.e., UGW2 sends an Echo Response message to an opposite end after the UGW2 receives an echo request message, wherein the destination address of the Echo Response message is the address of the GTP endpoint 1, the destination port number of the UDP is set to be a source port number of the echo request message in step S202, the TEID is all-zero, the source address is an address of the UGW2, the source port number is the destination port number of the echo request message in step S202, and the SN is an SN of the echo request message.

The GTP endpoint 1, i.e., UGW1 ends a timer t1 and starts a timer t2 after the UGW1 receives the Echo Response message.

If the timer t1 times out and the Echo Response message is not received, the GTP endpoint 1 will resend an echo request message, the message format and content thereof are the same as those of the echo request message which is sent for the first time, and then the timer t1 is started again, if the Echo Response message is not received after the timer t1 times out, the above operation is repeated, if the Echo Response message is not received after the operation is performed for N1 times, it is determined that the link is disconnected, and the GTP endpoint 1 locally performs related operations such as deleting the context of the GTP.

After the timer t2 times out, the GTP endpoint 1 will send another echo request message, the SN of the message is configured to add 1 to the SN of the last one echo request message, the timer t1 is started, and subsequent operations repeat steps S202 and S204 mentioned above.

In step S206, the UGW2 sends an echo request message to the UGW1.

The GTP endpoint 2, i.e., UGW2, sends the echo request message to the GTP endpoint 2, i.e., UGW1.

In step S208, the UGW1 sends an echo response message to the UGW2.

The GTP endpoint 1, i.e., UGW1, receives the echo request message and replies an echo response message. The specific operations are the same as steps S202 and S204, and different points lie in switching roles of the GTP endpoint 1 and the GTP endpoint 2.

The GTP endpoint 1 and the GTP endpoint 2 respectively detect respective echo request and response message pairs, and there is no dependency between the message pairs detected in steps S202 and S204 and the message pairs detected in steps S204 and S206.

The GTP principle mentioned above is suitable for the existing gateway/NodeB of 3GPP, and the GTP endpoint generally refers to any network element such as an eNB, a NB, a SGW, a P-GW, an ePDG, a credit extension access gateway, an SGSN or a GGSN of a 3GPP network, etc. of the 3GPP network. When the SDN realizes the EPC, logics related to control planes are realized on the SDN controller, as a forwarding device, the UGW only has a forwarding function and a very simple logic control function; therefore, how to realize the detection of a GTP session (which is specifically referred as GTP-U herein), i.e., how to use the echo request message and the echo response message is a problem to be solved.

For the problem that in the related art, the logic of the user plane and the logic of a control plane are unclear during detection of the data links between GTP endpoints, no effective solution has been provided at present.

### Summary

A method, device and system, controller and gateway for detecting a data link are provided in the embodiments of the present invention to at least solve the above-mentioned problems.

According to one aspect of the present invention, a method for detecting a data link is provided, comprising: receiving, by a Unified Gateway (UGW), context information of a General Packet Radio Service Tunnelling Protocol (GTP) user plane, wherein the context information is sent by a Software Defined Network (SDN) controller; and detecting, by the UGW, a data link between the UGW and a GTP endpoint according to the context information of the GTP user plane.

Preferably, the context information of the GTP user plane is born on an OPENFLOW protocol message, the OPENFLOW protocol message comprising an OPENFLOW protocol Table Modification Request (OFP_Table_mod_request) message and/or Hello message.

Preferably, the context information of the GTP user plane comprises at least one piece of the following: timer information, counter information and header information.

Preferably, detecting, by the UGW, the data links between the UGW and the GTP endpoint according to the context information of the GTP user plane comprises: generating, by the UGW, a data link detection message according to the context information of the GTP user plane; and detecting, by the UGW, the data links between the UGW and the GTP endpoint according to the data link detection message.

Preferably, the GTP endpoint is a second UGW or a traditional GTP endpoint.

Preferably, in the case where the data link detection message is an echo request message and/or an echo response message, detecting the data link between the UGW and the GTP endpoint according to the data link detection message comprises: receiving an echo response message which corresponds to the echo request message and is sent by the GTP endpoint, and/or sending the echo request message to the GTP endpoint according to a trigger event; and detecting the data link between the UGW and the GTP endpoint according to the echo request message and/or the corresponding echo response message.

Preferably, the trigger event comprises at least one of the following: a timer set according to the timer information carried in the context information of the GTP user plane times out; and the echo request message of the OPENFLOW protocol of the SDN controller is received.

Preferably, in the case where the UGW detects that the data link is disconnected, a path detection failed message is sent to the SDN controller.

Preferably, the path detection failed message is born in an error message of the OPENFLOW protocol, a port status message of the OPENFLOW protocol or the echo response message of the OPENFLOW protocol, wherein the echo response message is sent by the UGW to the SDN controller.

According to one aspect of the present invention, a method for detecting a data link is provided, comprising: acquiring, by an SDN controller, context information of the GTP user plane; and sending, by the SDN controller, the context information of the GTP user plane to at least one GTP endpoint, wherein the context information of the GTP user plane is used for detecting the data link between the at least one UGW and the GTP endpoint.

Preferably, the method also comprises: receiving, by the SDN controller, the path detection failed message sent by the at least one UGW; and deleting, by the SDN controller, the context information of the GTP user plane according to the path detection failed message or notifying, by the SDN controller, a user equipment (UE) of initiating a reattachment.

According to another aspect of the present invention, a device for detecting a data link is provided, comprising: a receiving component configured to receive context information of a General Packet Radio Service Tunnelling Protocol (GTP) user plane, wherein the context information is sent by a Software Defined Network (SDN) controller; and a link detecting component configured to detect a data link between the device and a GTP endpoint according to the context information of the GTP user plane.

Preferably, the context information of the GTP user plane is born on an OPENFLOW protocol message, the OPENFLOW protocol message comprising an OPENFLOW Protocol Table Modification Request (ofp_table_mod_request) message and/or Hello message.

Preferably, the context information of the GTP user plane comprises at least one piece of the following: timer information, counter information and header information.

Preferably, the link detecting component is further configured to generate a data link detection message according to the context information of the GTP user plane; and to detect the data link between the device and the GTP endpoint according to the data link detection message.

Preferably, the device further comprises a reporting device configured to send a path detection failed message to the SDN controller in the case where it is detected that the data link is disconnected.

According to another aspect of the embodiments of the present invention, a device for detecting a data link is provided, comprising: an acquiring component configured to acquire the context information of the GTP user plane; and a sending component configured to send the context information of the GTP user plane to at least one UGW, wherein the context information of the GTP user plane is used for detecting the data link between the at least one UGW and the GTP endpoint.

Preferably, the device further comprises a processing component configured to receive a path detection failed message sent by the at least one UGW and delete the context information of the GTP user plane according to the path detection failed message or notify user equipment (UE) of initiating a reattachment according to the path detection failed message.

According to yet another aspect of the embodiments of the invention, a gateway is provided, comprising the above mentioned device, wherein the gateway is a UGW.

According to yet another aspect of the embodiments of the invention, a controller is provided, comprising the above mentioned device, wherein the controller is an SDN controller.

According to yet another aspect of the embodiments of the invention, a system for detecting a data link is provided, comprising the above-mentioned controller and the above-mentioned at least one gateway.

By means of the embodiments of the present invention, a UGW receives context information, sent by the SDN controller, of a GTP user plane; and the UGW user plane detects a data link between the GTP endpoints, so that problem exists during detection of the data link between GTP endpoints is solved, thereby achieving the effect of improving the data link detection quality between GTP endpoints.

### Brief Description of the Drawings

Drawings, provided for further understanding of the present invention and forming a part of the specification, are used to explain the present invention together with embodiments of the present invention rather than to limit the present invention. In the drawings:
Fig. 1 is an architecture diagram for realizing an EPS/GPRS network using the SDN according to the related art;
Fig. 2 is a flowchart illustrating keeping alive a GTP-U session according to the related art;
Fig. 3 is a flowchart illustrating a method for detecting a data link according to embodiment I of the present invention;
Fig. 4 is a flowchart illustrating a method for detecting a data link according to embodiment II of the present invention;
Fig. 5 is a structure diagram of a device I for detecting a data link according to embodiment III of the present invention;
Fig. 6 is a structure diagram of a device II for detecting a data link according to embodiment IV of the present invention;
Fig. 7 is a structure diagram of a system for detecting a data link according to embodiment V of the present invention;
Fig. 8 is a structure diagram of a system for detecting a data link according to preferred embodiment I of the present invention;
Fig. 9 is a structure diagram of a system for detecting a data link according to preferred embodiment II of the present invention;
Fig. 10 is a flowchart illustrating a method for detecting a data link according to preferred embodiment III of the present invention;
Fig. 11 is a flowchart illustrating a method for detecting a data link according to preferred embodiment IV of the present invention;
Fig. 12 is a flowchart illustrating a method for detecting a data link according to preferred embodiment V of the present invention;
Fig. 13 is a flowchart illustrating a method for detecting a data link according to preferred embodiment VI of the present invention; and
Fig. 14 is a flowchart illustrating a method for detecting a data link according to preferred embodiment VII of the present invention.

### Detailed Description of the Embodiments

The present invention is described below with reference to the accompanying drawings and embodiments in detail. Note that, the embodiments of the present invention and the features of the embodiments can be combined with each other if there is no conflict.

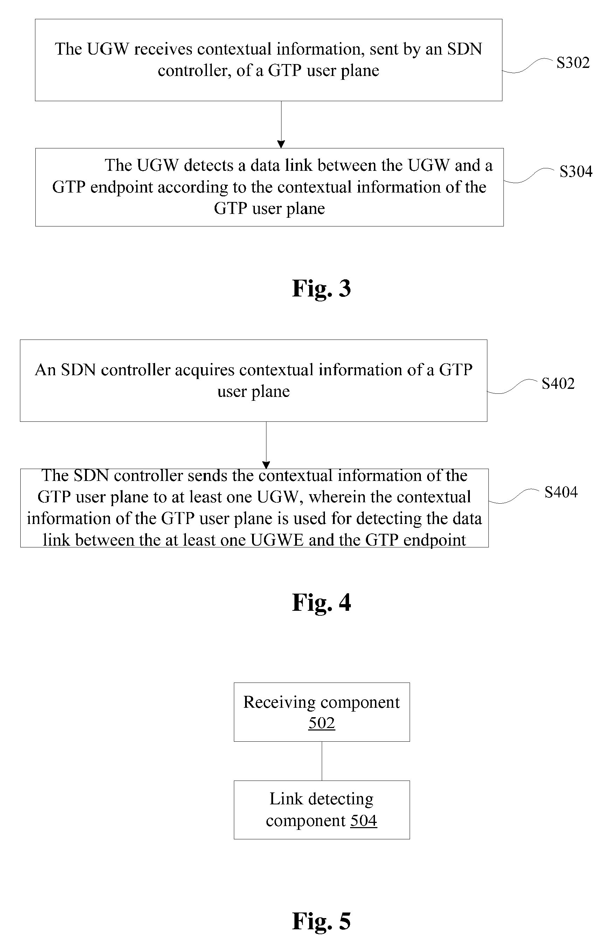

A method for detecting a data link is provided in the embodiments of the present invention. Fig. 3 is a flowchart illustrating a method for detecting a data link according to embodiment I of the present invention, and as shown in Fig. 3, the flow comprises the following steps.

In step S302, the UGW receives context information, sent by an SDN controller, of a GTP user plane; and

In step S304, the UGW detects a data link between the UGW and a GTP endpoint according to the context information of the GTP user plane.

By means of the above-mentioned steps, the problem that in the related art, the logic of the user plane and the logic of a control plane are unclear during detection of the data link between GTP endpoints is solved, and the effect of improving the clarity of the logic of the user plane and the logic of the control plane is achieved.

The context information of the GTP user plane may be born on many messages between the SDN controller and the UGW, but preferably, may be born on an OFP_Table_mod_request message or a Hello message. Of course, the OFP_Table_mod_request message and/or the Hello message are only used for accounting for the GTP keep-alive mechanisms, i.e., detecting the data link between GTP endpoints, but it is not precluded that the SDN controller sends the context information of the GTP user plane to the UGW using other extended messages or newly defined messages. By bearing the context information of the GTP user plane on the OFP_Table_mod_request message and/or the Hello message, resources can be saved, and the burden at the SDN controller side can be reduced.

The context information of the GTP user plane may comprise much parameters information, preferably may comprise at least one piece of the following: timer information, counter information and header information. The context information of the GTP user plane may be all the context information, such as timer information about keeping alive the GTP, counter information and header information, and also may be a part of the context information, such as a combination of one or several of the above. By carrying the above-mentioned parameter information, the above-mentioned parameter information can be acquired by the GTP endpoint, and the data link detection between the GTP endpoints can be further performed according to the above-mentioned parameter information.

After having received the context information, sent by the SDN controller, of the GTP user plane, the UGW may generate a data link detection message according to the context information of the GTP user plane and detect the data link between the UGW and the GTP endpoint of the opposite end according to the data link detection message. By means of the above-mentioned steps, the UGW may use a data link detection message to detect the data link, and the data link detection message is generated according to the context information of the GTP user plane, and therefore, the maintenance of the GTP session may be achieved when the data link detection between the GTP endpoints is performed.

The GTP endpoints may be many traditional network elements supporting the GTP, i.e., traditional GTP endpoints, such as an eNB, a NB, a SGW, a P-GW, an ePDG, a credit extension access gateway, an SGSN or a GGSN of a 3GPP network, etc.; Preferably, they also may be a Unified Gateways (UGW). In the way, the data link detection between the UGWs, or between the UGW and the traditional GTP endpoint may be achieved.

The data link detection message may be of various types, preferably, may be the echo request message and/or echo response message of the GTP. In the case where the data link detection message is an echo request message and/or an echo response message of a GTP, the echo request message of the GTP may be sent to the GTP endpoint of the opposite end, and/or the echo response message of the GTP, which is sent by the GTP endpoint of the opposite end is received according to the trigger event, and the data link between the GTP endpoints of the opposite end is detected according to the echo request message of the GTP and/or the echo response message of the GTP. Preferably, the trigger event may comprise at least one piece of the following: a timer set according to the timer information carried in the context information of the GTP user plane times out; and the echo request message and/or echo response message of the OF protocol of the SDN controller is received. By means of the above-mentioned steps, the echo request message and/or the echo response message of the GTP between the GTP endpoints can be used for data link detection.

In the case where it is detected that the data link is disconnected, the UGW may send a message notifying that the data link is disconnected to the SDN controller, the message notifying that the data link is disconnected may be born on an error message of the OPENFLOW protocol, a port status message of the OPENFLOW protocol or the echo response message of the OPENFLOW protocol, which is sent by the UGW to the SDN controller. By means of the above-mentioned steps, the SDN controller can timely learn the status of the data link between the GTP endpoints, so as to perform a corresponding processing.

A method for detecting a data link is provided in the embodiments of the present invention. Fig. 4 is a flowchart illustrating a method for detecting a data link according to embodiment II of the present invention, as shown in Fig. 4, the flow comprises the following steps.

In step S402, an SDN controller acquires context information of a GTP user plane; and

In step S404, the SDN controller sends the context information of the GTP user plane to at least one UGW, wherein the context information of the GTP user plane is used for detecting the data link between the at least one UGWE and the GTP endpoint.

Preferably, the method also comprises: the SDN controller receives the path detection failed message sent by the at least one UGW; and the SDN controller deletes the context information of the GTP user plane according to the path detection failed message or notifies a user equipment (UE) of initiating a reattachment according to the path detection failed message.

A device I for detecting a data link is also provided in the embodiments of the present invention. Fig. 5 is a structure diagram of a device I for detecting a data link according to embodiment III of the present invention. As shown in Fig. 5, the device comprises:
a receiving component 502 configured to receive context information, sent by an SDN controller, of a GTP user plane; and
a link detecting component 504 configured to detect a data link between the device and a GTP endpoint according to the context information of the GTP user plane.

Preferably, the context information of the GTP user plane is born on an OPENFLOW protocol message, the OPENFLOW protocol message comprising a OFP_Table_mod_request message and/or Hello message.

Preferably, the context information of the GTP user plane comprises at least one piece of the following: timer information, counter information and header information.

Preferably, the link detecting component is further configured to generate a data link detection message according to the context information of the GTP user plane; and to detect the data link between the device and the GTP endpoint according to the data link detection message.

Preferably, the device also comprises a reporting component configured to send a path detection failed message to the SDN controller in the case where it is detected that the data link is disconnected.

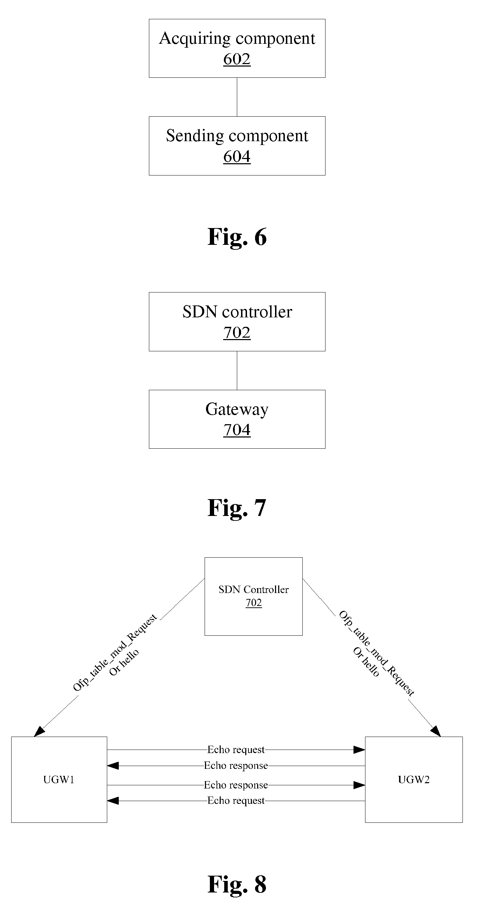

A device II for detecting a data link is provided in the embodiments of the present invention. Fig. 6 is a structure diagram of a device II for detecting the data link according to embodiment IV of the present invention. As shown in Fig. 6, the device comprises:
an acquiring component 602 configured to acquire context information of a GTP user plane; and
a sending component 604 configured to send the context information of the GTP user plane to at least one UGW, wherein the context information of the GTP user plane is used for detecting the data link between the at least one UGW and the GTP endpoint.

Preferably, the device further comprises a processing component 602 configured to receive a message notify that the data link is disconnected sent by the at least one UGW and delete the context information of the GTP user plane according to the message notify that the data link is disconnected or notify a user equipment (UE) of initiating a reattachment according to the message notify that the data link is disconnected.

A gateway is also provided in the embodiments of the present invention, and the gateway comprises the device I for detecting a data link and is a UGW.

A controller is also provided in the embodiments of the present invention, and the controller comprises the device II for detecting a data link and is an SDN controller.

A system for detecting a data link is also provided in the embodiments of the present invention. Fig. 7 is a structure diagram of a detection system for detecting a data link according to embodiment V of the present invention, and as shown in Fig. 7, the system comprises an SDN controller 702 in the present embodiment and a gateway 704 in at least one of the present embodiments.

### Prefered Embodiment I

Fig. 8 is a structure diagram of a system for detecting a data link according to preferred embodiment I of the present invention. As shown in Fig. 8, the system comprises an SDN controller 702, a UGW1 and a UGW2, wherein the UGW1 and the UGW2 are respectively equivalent to the gateway 704 in Fig. 7. In the case where there is a pair of UGWs, the UGW1 is equivalent to the gateway 704, the UGW2 is equivalent to the GTP endpoint, at the same time, the UGW2 is also equivalent to the gateway 704, and the UGW1 is also equivalent to the GTP endpoint.

After having established an OF connection with the UGW1 and the UGW2 respectively, the SDN controller 702 sends the context information of the GTP user plane to the UGW1 and the UGW2, the context information comprises parameter information about keeping alive the GTP-U, and the parameter information may comprise at least one piece of the following: timer information, counter information and header information.

The timer information may comprise at least one of the following parameters: a timer t1 and the corresponding maximum time interval T1; and a timer t2 and the corresponding maximum time interval T2. The counter information may comprise the following parameters: a counter n1 and the corresponding maximum number of times N1. The header information may comprise at least one of the following parameters: information about the version in the GTP head, the protocol type (PT), a Network Protocol Data Unit (N-PDU), an Extension Header Flag (E), a Sequence Number Flag (S), an N-PDU Number flag (PN), a Message Type, a length, a TEID, an SN, an extension header, etc.; and a destination address, a source address, a destination port number, a source port number and the protocol type of the GTP message.

The maximum value T1 of the timer t1 is the maximum time value for waiting the echo response message to reach after the SDN controller sends the echo request message. The maximum value of the timer t1 is defined as T3-RESPONSE in the standard and is represented using T1 in the present embodiment.

The maximum value N1 of the counter n1 is the maximum number of times for resending the echo request message by the SDN controller. The maximum value of the counter n1 is defined as N3-REQUESTS in the standard and is represented using N1 in the present embodiment.

The maximum value T2 of the timer t2 is a time interval for sending the echo request message.

In the present embodiment, the context information of the GTP user plane may be born on an OFP_Table_mod_request message or a Hello message. The context information is filled in a corresponding region of the OFP_Table_mod_request message or the Hello message in the format of more or one information element.

No mandatory sequence exists for the SDN controller 702 to send the context information of the GTP user plane to the UGW1 and the UGW2, the UGW1 may be sent to firstly, the UGW2 also may be sent to firstly, or the both are sent to at the same time.

The UGW1 and the UGW2 generate respectively an echo request message according to context information of the GTP user plane and send the echo request message to the opposite end, i.e., the UGW2 and the UGW1, respectively after having received the context information of the GTP user plane, and return an echo response message to the opposite end after having received the echo request message of the opposite end, so as to periodically perform the data link detection operation between the UGW1 and the UGW2. The UGW2 is equivalent to the second UGW.

### Example embodiment II

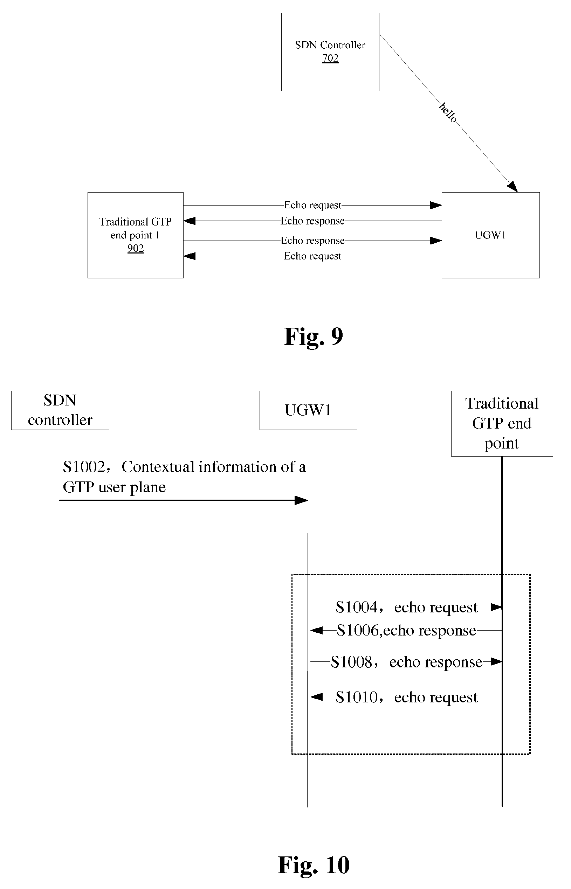

Fig. 9 is a structure diagram of a system for detecting a data link according to preferred embodiment II of the present invention. As shown in Fig. 9, the system comprises an SDN controller 702, a UGW1 and a traditional GTP endpoint 902, wherein the UGW1 is equivalent to the gateway 704 in Fig. 7.

After having established an OF connection with the UGW1, the SDN controller 702 sends the context information of the GTP user plane to the UGW1, wherein the context information comprises parameter information about keeping alive the GTP-U, the specific parameters are the same as those in preferred embodiment I, which is not described again herein.

The context information of the GTP user plane may be born on an OFP_Table_mod_request message or a Hello message. The context information is filled in a corresponding region of the OFP_Table_mod_request message or the Hello message in the format of more or one information element.

The UGW1 sends an echo request message to the traditional GTP endpoint 902 according to the context information of the GTP user plane after having receiving the context information of the GTP user plane, and returns echo response message to the opposite end, i.e., the traditional GTP endpoint 902, so as to periodically perform the data link detection operation between the UGW1 and the traditional GTP endpoint 902.

### Prefered embodiment III

Fig. 10 is a flowchart illustrating a method for detecting a data link according to preferred embodiment III of the present invention. As shown in Fig. 10, one end point of the GTP is the UGW1 controlled by the SDN controller, and the other end point is the traditional GTP endpoint, such as the traditional S-GW, P-GW, ePDG, and eNB. As shown in Fig. 10, the flow includes steps S1002 to S1010.

In step S1002, an SDN controller sends context information of a GTP user plane to the UGW1.

After having established an OF connection with the UGW1, the SDN controller sends the context information of the GTP user plane to the UGW1, the context information comprises parameters about keeping alive the GTP-U, and the parameters may comprise at least one piece of the following: timer information, counter information and header information.

The timer information may comprise at least one of the following parameters: a timer t1 and the corresponding maximum time interval T1; and a timer t2 and the corresponding maximum time interval T2. The counter may comprise the following parameters: a counter n1 and the corresponding maximum number of times N1. The header information may comprise at least one of the following parameters: version in the GTP head, a PT, an E, an S, a PN, a Message Type, a length, a TEID, an SN, a N-PDU, an extension header, etc.; and a destination address, a source address, a destination port number, a source port number and the protocol type of the GTP message.

The maximum value T1 of the timer t1 is the maximum time value for waiting the echo response message to reach after the SDN controller sends the echo request message. The maximum value of the timer t1 is defined as T3-RESPONSE in the standard and is represented using T1 in the present embodiment.

The maximum value N1 of the counter n1 is the maximum number of times for resending the echo request message by the SDN controller. The maximum value of the counter n1 is defined as N3-REQUESTS in the standard and is represented using N1 in the present embodiment.

The maximum value T2 of the timer t2 is a time interval for sending the echo request message.

In the present embodiment, the context information of the GTP user plane may be born on an OFP_Table_mod_request message or a Hello message. The context information is filled in a corresponding region of the OFP_Table_mod_request message or the Hello message in the format of more or one information element.

In steps S1004-S1010, the UGW1 generates an echo request message according to context information of the GTP user plane and send the echo request message to the traditional GTP endpoint after having received the context information of the GTP user plane, and returns an echo response message to the opposite end after having received the echo request message of the traditional GTP endpoint, so as to periodically perform the data link detection operation between the UGW1 and the traditional GTP endpoint. The traditional GTP endpoint performs operations according to the existing mechanism.

### Prefered Embodiment IV

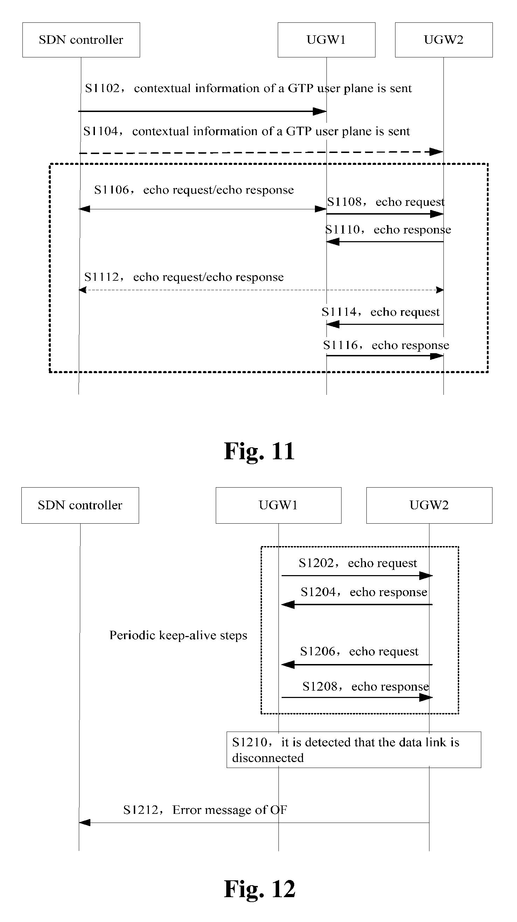

Fig. 11 is a flowchart illustrating a method for detecting a data link according to preferred embodiment IV of the present invention. In the present embodiment, an SDN controller sends context information of a GTP user plane to the UGW1 and the UGW2, and the context information of the GTP user plane does not comprise timer information and counter information. The timer itself maintains a part of context information of the GTP user plane, such as timer information and counter information, furthermore, the timer coordinates the relationship of a timer/counter of an echo request/response message of the GTP and a timer/counter of an echo request/response message of the OF, and the UGW is triggered by the echo request message of the OF protocol, which is sent by the SDN controller to the UGW, to generate the echo request message of the GTP according to the part of context information of the GTP user plane, which is sent by the SDN controller. The specific steps are as follows:
In step S1102, an SDN controller sends context information of a GTP user plane to a UGW1.

After the UGW1 established an OF connection with the SDN controller, the SDN controller sends the context information of the GTP user plane to the UGW1, the context information of the GTP user plane does not comprise a clock and a message counter. A message bearing the context information of the GTP user plane is an OFP_Table_mod_request message or a Hello message. The context information of the GTP user plane is filled in a corresponding region of the OFP_Table_mod_request message or the Hello message in the format of more or one information element.

In step S1104, an SDN controller sends context information of a GTP user plane to a UGW2.

After the UGW2 established an OF connection with the SDN controller, the SDN controller sends the context information of the GTP user plane to the UGW2, and the context information of the GTP user plane does not comprise a clock and a message counter. A message bearing the context information of the GTP user plane is an OFP_Table_mod_request message or a Hello message. The context information of the GTP user plane is filled in a corresponding region of the OFP_Table_mod_request message or the Hello message in the format of more or one information element.

If one of two endpoints of the GTP is a traditional GTP endpoint rather than a UGW, one step of the above-mentioned steps S1102 and S1104 may be unnecessary.

In step S1106, the SDN controller sends an echo request message to the UGW1 and receives an echo response message.

The SDN controller periodically sends an echo request message of an OF protocol to the UGW1 and receives an echo response message replied by the UGW1.

It should be noted that the echo request and response messages of the OF herein are different from the echo request and response messages of the GTP protocol, and the sending and receiving of the echo request and response messages of the OF are related arts.

In step S1108, the UGW1 sends the echo response message to the UGW2.

After receiving the echo request message of the OF protocol from the SDN controller, the UGW1 generates an echo request message of the GTP and sends the echo request message of the GTP to the UGW2.

The echo request message of the GTP, which is generated by the UGW1, and the echo request message of the OF, which is sent by the SDN controller can be in a one-to-one relationship and also can be in a one-to-many relationship. That is, each echo request message of the OF may trigger one echo request message of the GTP, or every N (N is a positive integer) echo request messages of the OF, the UGW generates one echo request message of the GTP.

In step S1110, the UGW2 responds to the echo response message according to the existing mechanism.

In step S1112, the SDN controller sends an echo request message to the UGW2 and receives an echo response message.

The SDN controller periodically sends an echo request message of an OF protocol to the UGW2 according to the existing mechanism and receives an echo response message replied by the UGW2.

In step S1114, the UGW2 sends the echo request message to the UGW1.

After receiving the echo request message of the OF protocol of the timer, the UGW2 generates an echo request message of the GTP and sends same to the UGW1.

In step S1116, the UGW1 replies the echo response message.

The echo request message of the GTP, which is generated by the UGW2, and the echo request message of the OF can be in a one-to-one relationship and also can be in a one-to-many relationship. That is to say, each echo request message of the OF may trigger one echo request message of the GTP, or every N (N is a positive integer) echo request messages of the OF, the UGW generates one echo request message of the GTP.

### Embodiment V

Fig. 12 is a flowchart illustrating a method for detecting a data link according to preferred embodiment V of the present invention. As shown in fig. 12, the flow comprises the following steps S1202 to S1212.

In steps S1202-S1208, the data link between the GTP endpoints are periodically detected.

The detection steps are the same as the detection steps in preferred embodiment IV, which is not described again herein.

In step S1210, it is detected that the data link is disconnected.

One GTP endpoint, such as the UGW1, or two GTP endpoints, such as the UGW1 and the UGW2, detect that the data link between the GTP endpoints is disconnected.

In step S1212, a Path Detection Failed notifying message is sent to the SDN controller.

It is assumed that the UGW2 detects that the data link detection fails, the UGW2 may perform the following processing: carrying an error type (ofp_error_type) with a value of GTP path detection failed in an Error Message of the OF (OFPT_ERROR_MSG), and notifying the SDN controller of this event. That is, a path detection failed message is born on the error message of the OF.

After the SDN controller receives the path detection failed message, a corresponding operation is used, such as deleting the context or a bear of the GTP user plane.

### Preferred embodiment VI

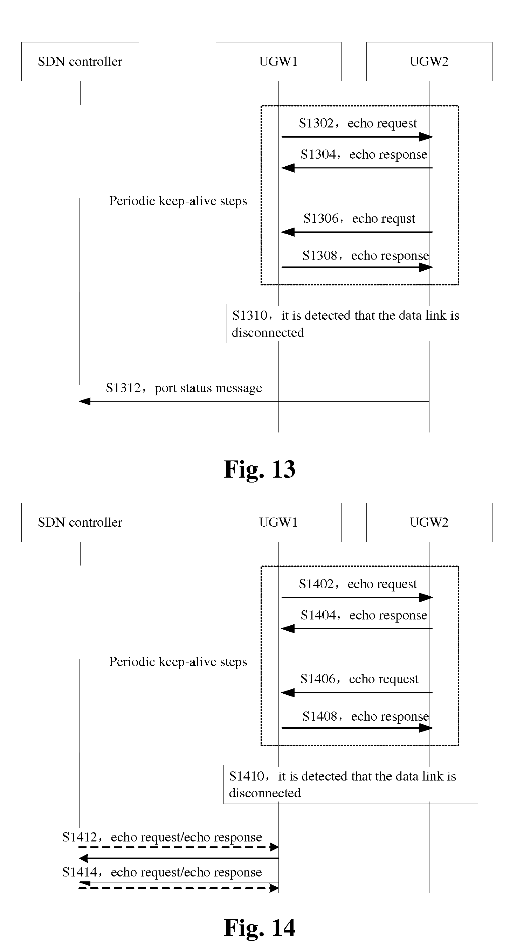

Fig. 13 is a flowchart illustrating a method for detecting a data link according to preferred embodiment VI of the present invention. As shown in Fig. 13, steps S1302-S1310 are the same as the steps S1202-S1210 in the preferred embodiment V The difference lies in that in step S1312, it is consumed that the UGW2 detects that the data link is disconnected, the UGW2 may perform the following processing: carrying a port reason (ofp_port_reason) with the value of GTP path port failed in a Port status message of the OF (i.e., ofp_port_status message), and notifying the SDN controller of this event, that is, the path detection failed message is born on the Port status message of the OF.

### Preferred embodiment VII

Fig. 14 is a flowchart illustrating a method for detecting a data link according to preferred embodiment VII of the present invention, As shown in Fig. 14, steps S1402-S1410 are the same as the steps S1202-S1210 in the preferred embodiment V The difference lies in that in step S1412, it is consumed that the UGW1 detects that the data link is disconnected, the UGW1 may perform the following processing: carrying a reason value which is GTP path failed in an echo response message, which is sent from the UGW to the SDN controller, and notifying the SDN controller of this event, that is, the echo request and/or echo response message bears a path detection failed message.

In step S1412, the echo request message of the OF is displayed as a hidden line in the figure, which means that the message is not used for triggering the step S1410. Since the echo request of the OF is sent frequently (hundreds of milliseconds-second level), and the period for maintaining the GTP path is greater than 60s, when the UGW detects the data link between the UGWs is disconnected, the UGW may wait for the next echo response message of the OF which carries the event to notify the SDN controller.

Or, it also can be achieved by step S1414, the UGW actively sends an echo request message to the Controller and notifies the SDN controller of this event.

The functions of the SDN controller in the above embodiments may be realized on all network devices, such as any one server or SDN controller having computational capabilities, such as an X86 server, the functions of the UGW functions may be realized on all network devices, such as any one server or router having the routing function or a switch, such as an X86 server and an enhanced common switch.

The above embodiments only introduce typical implementations, in fact, besides that the context information of the GTP may be born on an OFP_Table_mod_request message or a Hello message, which is introduced above, the existing other messages of the OF, or newly added messages, or other messages of the non-OF protocol, such as a southbound (SB) protocol, an OVSDB (OVS database) protocol, an OF configuration (OF-config) protocol, a path Computation Element Communication Protocol (PCEP) protocol and a border Gateway protocol (BGP) protocol, all can extend and support the context message of the GTP, and these methods are all in the coverage areas of the embodiments of the present invention. The specific implementation steps are similar to those introduced in the above-mentioned embodiments, and the different points are only reflected on the construction of the message.

It can be seen from the above description that the embodiments of the present invention realize the following technical effects: having the effect of improving the data link detection quality between GTP endpoints.

Obviously, those skilled in the art should know that each of the mentioned components or steps of the present invention can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection of the present invention.

### Industrial Applicability

As stated above, the method, device, system controller and gateway for detecting the data link provided in the embodiments of the present invention have the following beneficial effect: improving the quality of detecting the data link between the GTP endpoints.

## Claims

1. A method for detecting a data link, **characterized by** comprising:
receiving, by a Unified Gateway (UGW), context information, sent by a Software Defined Network (SDN) controller, of a General Packet Radio Service Tunnelling Protocol (GTP) user plane; and
detecting, by the UGW, a data link between the UGW and a GTP endpoint according to the context information of the GTP user plane.

2. The method according to claim 1, **characterized in that** the context information of the GTP user plane is born on an OPENFLOW protocol message, the OPENFLOW protocol message comprising a OPENFLOW protocol Table Modification Request (OFP_Table_mod_request) message and/or Hello message.

3. The method according to claim 2, **characterized in that** the context information of the GTP user plane comprises at least one piece of the following:
timer information, counter information and header information.

4. The method according to any one of claims 1 to 3, **characterized in that** detecting, by the UGW, the data link between the UGW and the GTP endpoint according to the context information of the GTP user plane comprises:
generating, by the UGW, a data link detection message according to the context information of the GTP user plane; and
detecting, by the UGW, the data link between the UGW and the GTP endpoint according to the data link detection message.

5. The method according to claim 4, **characterized in that** the GTP endpoint is a second UGW or a traditional GTP endpoint.

6. The method according to claim 4, **characterized in that** in the case where the data link detection message is an echo request message and/or an echo response message, detecting the data link between the UGW and the GTP endpoint according to the data link detection message comprises:
receiving an echo response message which corresponds to the echo request message and is sent by the GTP endpoint, and/or sending the echo request message to the GTP endpoint according to a trigger event; and
detecting the data link between the UGW and the GTP endpoint according to the echo request message and/or the corresponding echo response message.

7. The method according to claim 6, **characterized in that** the trigger event comprises at least one of the following: a timer set according to the timer information carried in the context information of the GTP user plane times out; and the echo request message of the OPENFLOW protocol of the SDN controller is received.

8. The method according to claims 1 to 3, **characterized in that** in the case where the UGW detects the data link is disconnected, a path detection failed message is sent to the SDN controller.

9. The method according to claim 8, **characterized in that** the path detection failed message is born in an error message of the OPENFLOW protocol, a port status message of the OPENFLOW protocol or the echo response message of the OPENFLOW protocol, wherein the echo response message is sent by the UGW to the SDN controller.

10. A method for detecting a data link, **characterized by** comprising:
acquiring, by a Software Defined Network (SDN) controller, context information of a General Packet Radio Service Tunnelling Protocol (GTP) user plane; and
sending, by the SDN controller, context information of the GTP user plane to at least one Unified Gateway (UGW), wherein the context information of the GTP user plane is used for detecting a data link between the UGW and the GTP endpoint.

11. The method according to claim 10, **characterized in that** the method further comprises:
receiving, by the SDN controller, a path detection failed message sent by at least one UGW; and
deleting, by the SDN controller, the context information of the GTP user plane according to the path detection failed message, or notifying, by the SDN controller, a User Equipment (UE) of initiating a reattachment.

12. A device for detecting a data link, **characterized by** comprising:
a receiving component configured to receive context information, sent by a Software Defined Network (SDN) controller, of a General Packet Radio Service Tunneling Protocol (GTP) user plane; and
a link detecting component configured to detect a data link between the device and a GTP endpoint according to the context information of the GTP user plane.

13. The device according to claim 12, **characterized in that** the context information of the GTP user plane is born on an OPENFLOW protocol message, the OPENFLOW protocol message comprising an OPENFLOW Protocol Table Modification Request (ofp_table_mod_request) message and/or Hello message.

14. The device according to claim 13, **characterized in that** the context information of the GTP user plane comprises at least one piece of the following:
timer information, counter information and header information.

15. The device according to any one of claims 12 to 14, **characterized in that** the link detecting component is further configured to generate a data link detection message according to the context information of the GTP user plane; and to detect the data link between the device and the GTP endpoint according to the data link detection message.

16. The device according to any one of claims 12 to 14, **characterized in that** the device further comprises a reporting device configured to send a path detection failed message to the SDN controller in the case where it is detected that the data link is disconnected.

17. A device for detecting a data link, **characterized by** comprising:
an acquiring component configured to acquire context information of a General Packet Radio Service Tunneling Protocol (GTP) user plane; and
a sending component configured to send the context information of the GTP user plane to at least one Unified Gateway (UGW), wherein the context information of the GTP user plane is used for detecting the data link between the at least one UGW and the GTP endpoint.

18. The device according to claim 17, **characterized in that** the device further comprises a processing component configured to receive a path detection failed message sent by the at least one UGW and delete the context information of the GTP user plane or notify a user equipment (UE) of initiating a reattachment according to the path detection failed message.

19. A gateway, **characterized by** comprising the device of any one of claims 12 to 16, wherein the gateway is a Unified Gateway (UGW).

20. A controller, **characterized by** comprising the device of any one of claims 17 and 18, wherein the controller is a Software Defined Network (SDN) controller.

21. A system for detecting a data link, **characterized by** comprising the controller according to claim 20 and at least one gateway according to claim 19.
